# EUROPEAN PATENT APPLICATION

(11) **EP 2 660 198 A1**
(43) Date of publication of application: **06.11.2013**
(21) Application number: 10861242.5
(22) Date of filing: 29.12.2010
(51) Int. Cl.: C01B 31/04

(54) **POROUS GRAPHENE MATERIAL AND PREPARATION METHOD AND USES AS ELECTRODE MATERIAL THEREOF**

(71) Applicant: Ocean's King Lighting Science&Technology Co., Ltd., Guangdong 518054 (CN)
(72) Inventor: ZHOU, Mingjie, Shenzhen Guangdong 518054 (CN); WANG, Yaobing, Shenzhen Guangdong 518054 (CN)
(74) Representative: Brunetti, Fabrizio
(86) International application number: PCT/CN2010/080464
(87) International publication number: WO 2012/088683

(57) **Abstract**

A porous graphene material and preparation method thereof are provided. The pore diameter of the porous graphene material is 1 nm-10 µm and its specific surface area is 100m²/g-2000m²/g. The method for preparing the porous graphene material comprises the following steps: mixing graphene or graphene oxide with pore-forming agent, and pressing to obtain bulk or powder particle composite; heating the composite, and releasing gases from the pore-forming agent to obtain the porous graphene material. The porous graphene material can be used as electrode materials of supercapacitor and lithium ion battery.

## Description

### Technical Field

The present invention relates to an electrode material, and in particular relates to a porous graphene material and a method for the preparation thereof and use thereof as an electrode material.

### Background

Since Andre K. Geim of the University of Manchester, the United Kingdom, prepared a graphene material in 2004, it has drawn broad attention due to its unique structure and optoelectronic properties. Various new and unique properties and potential applications thereof are attracting a lot of researcher. Mono-layer graphene has large specific surface area, excellent electrical and thermal conductivities and low thermal expansion coefficient. The properties which can be mentioned are, for example, 1. high strength, Young's molar amount (1,100 GPa), and fracture strength (125GPa); 2. high thermal conductivity (5,000 W/nK); 3. high electrical conductivity and carrier transmission rate (200,000 cm²/V*s); and 4. high specific surface area (theoretical value: 2,630 m²/g). The properties which can be especially mentioned are its high electrical conductivity, large specific surface area and two-dimensional nano-scale structure of mono-molecular layers. Accordingly, it can be used as an electrode material in a supercapacitor and a lithium ion battery.

In practice, however, due to the strong π - π interaction between the mono-layer structures of graphene, graphene would be liable to agglomerate, leading to great decrease in the specific surface area, which greatly limits its application in materials.

A porous graphene material consists of multiple graphene monolayer structures, has high mechanical strength, and is not liable to agglomerate, and therefore has a broad application prospect.

However, it is a problem in the field of electrode materials to conveniently obtain a porous graphene material.

### Summary

In view of the above, it is necessary to provide a simple method for preparing a porous graphene material, and a porous graphene material obtained by the above method, as well as use of the porous graphene material as an electrode material in a supercapacitor or a lithium ion battery.

A porous graphene material is provided, which has a pore size of 1 nm to 10 µm, and a specific surface area of 100 m²/g to 2000 m²/g.

Preferably, the porous graphene material having a pore size of 50 nm to 10 µm represents 20% to 40% of the total volume; that having a pore size of 2 nm to 50 nm represents 35% to 55% of the total volume; and that having a pore size of 1 nm to 2 nm represents 20% to 25% of the total volume.

Preferably, the porous graphene material has a pore size of 2 to 50 nm and a specific surface area of 150 m²/g to 1000 m²/g.

Preferably, the porous graphene material has a pore specific surface area of 150 m²/g to 2500 m²/g.

A method for preparing a porous graphene material is provided, which comprises the steps of:
mixing graphene or graphene oxide with a pore-forming agent which is capable of releasing a gas, and pressing into a composite in a form of blocks or powdered particles; and
heating the composite to release a gas from the pore-forming agent to give the porous graphene material.

Preferably, the pore-forming agent is dry ice, which may be heated to a temperature under which dry ice gasifies.

Preferably, the pore-forming agent is an organic polymeric material or an organic small-molecular material which has a decomposition temperature of below 2000 °C. The procedure for releasing a gas from the pore-forming agent in the composite comprises: heating the composite to 500 to 2000 °C so that the organic polymeric material or the organic small-molecular material decomposes to release a gas.

Preferably, said organic polymer material is one or more of polycarbonate beads, polystyrene beads, polypropylene beads, polyacetylene beads, polyphenylene beads, polydimethylsiloxane beads, polycarbonate nanoparticles, polystyrene nanoparticles, polypropylene nanoparticles, polyacetylene nanoparticles, polyphenylene nanoparticles and polydimethylsiloxane nanoparticles; and
the organic small-molecular material is one or more of ammonium acetate, ammonium carbonate, tetramethyl ammonium acetate, ammonium nitrate, sodium bicarbonate, basic cupric carbonate and potassium permanganate.

Preferably, the beads of the organic polymeric material have diameter of 10 nm to 1 µm.

Preferably, the porous graphene material may be used as an electrode material in a supercapacitor or a lithium ion battery.

The method for preparing such a porous graphene material comprises: mixing graphene or graphene oxide with a pore-forming agent, pressing into a composite, releasing a gas from the pore-forming agent in the composite, and conducting a thermal treatment at 500 to 2000 °C if graphene oxide is used, to give the porous graphene material. The method is simple, and the obtained porous graphene material has a large specific surface area, which favors macroscopic processing. The obtained porous graphene material may be used as an electrode material in a supercapacitor and a lithium ion battery.

### Description of the Figures

Fig. 1 shows the flowchart of an embodiment of the method for preparing a porous graphene material; and
Fig. 2 shows an SEM picture of the doped composite prepared in Example 4.

### Specific Embodiments

The porous graphene material and the method for preparing the same are further illustrated hereinbelow referring to the accompanying figures and Examples.

A porous graphene material is provided, which has a pore size of 1 nm to 10 µm, and a specific surface area of 100 m²/g to 2000 m²/g.

The porous graphene material having a pore size of 50 nm to 10 µm may represent 20% to 40% of the total volume; the porous graphene material having a pore size of 2 nm to 50 nm may represent 35% to 55% of the total volume; and the porous graphene material having a pore size of 1 nm to 2 nm may represent 20% to 25% of the total volume.

In a preferred embodiment, the porous graphene material has a pore size of 2 to 50 nm and a specific surface area of 150 m²/g to 1000 m²/g.

In a preferred embodiment, the porous graphene material has a pore specific surface area of 150 m²/g to 2500 m²/g.

Such a porous graphene material has relatively high specific surface area and pore specific surface area, and can be used as an electrode material in a supercapacitor and a lithium ion battery.

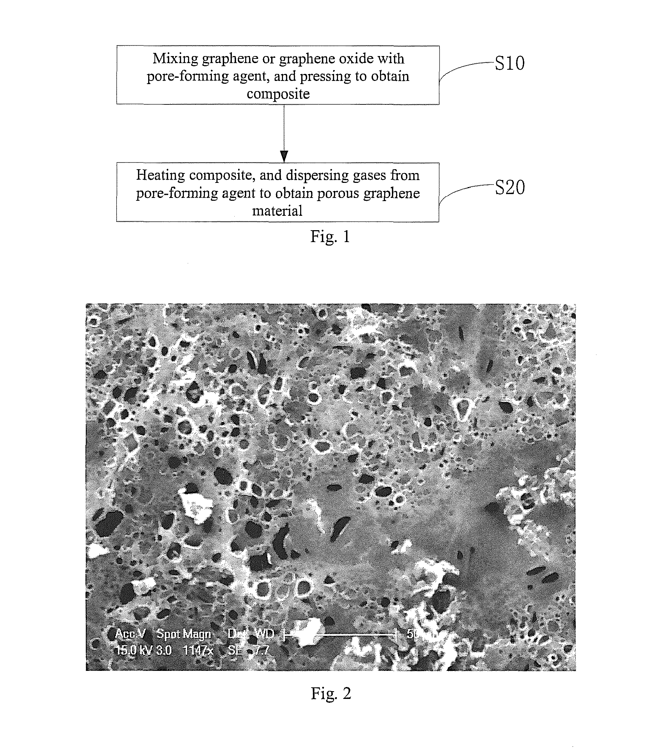

As shown in Fig. 1, a method for preparing a porous graphene material comprises the following steps.

S10: graphene or graphene oxide and a pore-forming agent are mixed, and pressed into a composite.

Graphene or graphene oxide and a pore-forming agent which is capable of releasing a gas may be mixed, and pressed into a composite in a form of blocks or powdered particles.

The pore-forming agent may be selected from substances which are capable of releasing a gas, and generally may be dry ice, an organic polymeric material or an organic small-molecule material having a decomposition temperature of below 2000 °C. By selecting different pore-forming agents, the specific reaction conditions may be different.

Generally, the pore-forming agent to be mixed with graphene may be in a form of a powdered material or a solution.

When dry ice is used as the pore-forming agent, dry ice may be in a form of powders. Graphene or graphene oxide powder and dry ice powder are mixed at -40 °C, and pressed into a block material or nano-scale particles, to give the composite.

When an organic polymeric material or an organic small-molecular material is selected as the pore-forming agent, the organic polymeric material may be in a form of powders or the organic small-molecular material may be in a form of powders or a solution. Graphene or graphene oxide powder is mixed with the pore-forming agent in a solvent, or with a powdered pore-forming agent, followed by removing the solvent or reducing the temperature, curing, and pressing into a block material or nano-scale particles to give the composite.

The organic polymer may be selected from those which are capable of being carbonized at an elevated temperature into carbon or a gas, including one or more of: polycarbonate beads, polystyrene beads, polypropylene beads, polyacetylene beads, polyphenylene beads, polydimethylsiloxane beads, polycarbonate nanoparticles, polystyrene nanoparticles, polypropylene nanoparticles, polyacetylene nanoparticles, polyphenylene nanoparticles and polydimethylsiloxane nanoparticles.

The organic small molecule may be selected from those which would decompose at an elevated temperature into a gas, including one or more of: ammonium acetate, ammonium carbonate, tetramethyl ammonium acetate, ammonium nitrate, sodium bicarbonate, basic cupric carbonate and potassium permanganate.

S20: the composite is heated to release a gas from the pore-forming agent to give the porous graphene material.

Depending on the pore-forming agent, the specific reaction conditions may be slightly different.

When dry ice is selected as the pore-forming agent, the composite obtained in S10 may be gradually warmed up to room temperature, and vacuum dried to remove dry ice. For the composite made from graphene, the composite is passivated to give the porous graphene material. For the composite made from graphene oxide, the composite is further subjected to a thermal treatment at 500 to 2000 °C and a thermal reduction to give the porous graphene material.

When an organic polymeric material or an organic small-molecular material is selected as the pore-forming agent, the composite obtained in S10 is heated to 500 to 2000 °C, at which time the organic polymeric material or the organic small-molecular material is removed through thermal decomposition. Part of the decomposition products is removed in vacuum. The composite is passivated and then washed with a solvent and dried to give the porous graphene material.

The surface of graphene oxide consists mainly of -C-OH or carbon-carbon epoxy bonds. Under an elevated temperature, two -OHs lose a water molecule, leading to the formation of a carbon-oxygen double bond. The carbon-oxygen double bond may be deprived, leading to the formation of carbon monoxide gas. Under an elevated temperature, the carbon-carbon epoxy bond may also be transformed to a carbon-oxygen double bond, leading to the formation of carbon monoxide gas. This eliminates O from graphene oxide, leading to the formation of graphene.

In the above thermal treatment, a mixed atmosphere of H₂ and Ar may be employed.

Graphene and graphene oxide in step S10 may be produced through the following steps.

### Providing graphite:

Graphite having a purity of more than 99.5% may be commercially available.

Preparing graphene oxide from graphite:

Generally, graphite oxide may be prepared by Hummers method. Graphite obtained in S10, potassium permanganate and concentrated strong oxidizing acid (sulfuric acid or nitric acid) are placed in one single container, heated in a water or oil bath, sufficiently oxidized, and taken out. Potassium permanganate is reduced with hydrogen peroxide first, and the product is washed several times with distilled water or hydrochloric acid and dried to give graphite oxide.

Hummers method is modified and employed in the preparation of graphene oxide to increase the yield and the purity of the product. The modified preparation procedure comprises the following steps.

Firstly, graphite, potassium persulfate and phosphorus pentoxide are added into concentrated sulfuric acid at 60 to 85 °C in a mass ratio of 2:1:1, stirred to mix homogeneously, naturally cooled down, washed to neutral, and dried to give a pre-treated mixture.

Secondly, the pre-treated mixture and potassium permanganate are added into concentrated sulfuric acid while keeping the temperature below 20 °C, heated in an oil bath at 30 to 40 °C for 1.5 to 2 h. Deionized water is added. 15 min later, hydrogen peroxide is added into the reaction. The mixture is filtered, and the solid is collected.

Finally, the above solid is washed with diluted hydrochloric acid and dried to give graphene oxide.

The purpose of using an oil bath is to better control the reaction temperature. In other embodiments, a water bath may also be used.

Reducing graphene oxide in liquid phase to produce graphene:
Firstly, graphene oxide is mixed with deionized water and dispersed therein to form a suspension. Generally, graphene oxide may be dispersed with an ultrasonic wave.
Secondly, a reducing agent is added into the above suspension, and heated to 90 to 100 °C to carry out a thermal reduction. 24 to 48 h later, a suspension of graphene is obtained. The reducing agent may be a soluble compound having a certain thermal stability, and the followings may be generally mentioned: hydrazine hydrate, sodium borohydride and para-phenylene diamine, preferably hydrazine hydrate.

Finally, the graphene suspension is filtered and the cake is collected, which is sequentially washed with water and methanol and dried to give graphene.

The method for preparing such a porous graphene material comprises: mixing graphene or graphene oxide with a pore-forming agent, pressing into a composite, releasing a gas from the pore-forming agent in the composite, and conducting a thermal treatment at 500 to 2000 °C if graphene oxide is used, to give the porous graphene material. The method is simple, and the obtained porous graphene material has a large specific surface area, which favors macroscopic processing. The obtained porous graphene material may be used as an electrode material in a supercapacitor and a lithium ion battery.

Specific examples are provided hereinbelow.

### Example 1

In the present Example, the process for preparing a porous graphene material from graphene oxide is as follows:
Graphite → Graphene oxide → Composite doped with graphene oxide → Porous graphene material
   (1) Graphite: purity 99.5%.
   (2) Preparation of graphene oxide according to a modified Hummers method (see Journal of the American Chemical Society, 1958, 80, 1339).

The specific steps are as follows. 20 g of 50 mesh graphite powder, 10 g of potassium persulfate and 10 g of phosphorus pentoxide are added into concentrated sulfuric acid at 80 °C, stirred to mix homogeneously, cooled down and allowed to stand for over 6 h, washed to neutral, and dried. The dried sample is added into 230 mL of concentrated sulfuric acid at 0 °C, followed by adding 60 g of potassium permanganate. The mixture is kept at below 20 °C, and then maintained at 35 °C in an oil bath for 2 h, followed by slowly adding 920 ml of deionized water. 15 min later, 2.8 L of deionized water (containing 50 mL of hydrogen peroxide having a concentration of 30%) is further added, after which the mixture turns bright yellow. The mixture is filtered while hot, and then washed with 5 L of hydrochloric acid having a concentration of 10%, filtered, and dried in vacuum at 60 °C for 48 h to give graphene oxide.
(3) Graphene oxide and dry ice powders are mixed under conditions of a temperature below -40 °C and a certain pressure, and pressed into a block material.
(4) The material is then gradually warmed up to room temperature, dried in vacuum, subjected to a thermal treatment at 500 °C, and then passivated to give the porous graphene material.

An automatic adsorption instrument (Belsorp type-II specific surface area tester from BEL Japan, Inc.) is used for determining the N₂ adsorption isotherm of the porous graphene material at 77K. The specific surface area, the pore volume and the pore size distribution of the porous graphene material are calculated with BET, t-Plot and BJH methods, respectively. Before measurement, the sample is subjected to a vacuum treatment at 150 °C for 10 h. N₂ adsorption amount at P/P0 = 0.99 is measured, and the total pore volume of the porous graphene material is calculated.

Measurement results: the porous graphene material prepared in Example 1 has a specific surface area aₛ of 136.14 m²/g, an average pore size dₚ of 8.0156 nm, and a pore specific surface area a_{P} of 264.88 m²/g.

### Example, 2

In the present Example, the process for preparing a porous graphene material from graphene is as follows:
Graphite → Graphene oxide → Graphene → Composite doped with graphene → Porous graphene material
   (1) Graphite: purity 99.5%.
   (2) Preparation of graphene oxide: same as Example 1.
   (3) Preparation of graphene: 100 mg of graphene oxide and 100 mL of deionized water are added into a 250 ml round-bottom flask, and the solution is a brownish-yellow suspension. The suspension is then dispersed with a 150 W ultrasonic wave. Finally, hydrazine hydrate (1 mL, 98%) is added and heated to 90 °C to react for 48 h. The resulted graphene is filtered, sequentially washed with 300 mL of water and 300 mL of methanol, and dried in a vacuum oven at 80 °C for 48 h.
   (4) Graphene and dry ice powders are mixed under conditions of a temperature below -40 °C and a certain pressure, and pressed into micro-scale particles.
   (5) The material is then gradually warmed up to room temperature, dried in vacuum, subjected to a thermal treatment at 2000 °C, and then passivated to give the porous graphene material.

An automatic adsorption instrument (Belsorp type-II specific surface area tester from BEL Japan, Inc.) is used for determining the N₂ adsorption isotherm of the porous graphene material at 77K. The specific surface area, the pore volume and the pore size distribution of the porous graphene material are calculated with BET, t-Plot and BJH methods, respectively. Before measurement, the sample is subjected to a vacuum treatment at 150 °C for 10 h. N₂ adsorption amount at P/P0 = 0.99 is measured, and the total pore volume of the porous graphene material is calculated.

Measurement results: the porous graphene material prepared in Example 2 has a specific surface area aₛ of 193.12 m²/g, an average pore size dₚ of 6.4984 nm, and a pore specific surface area a_{P} of 273.94 m²/g.

### Example 3

In the present Example, the process for preparing a porous graphene material from graphene oxide is as follows:
Graphite → Graphene oxide → Composite doped with graphene oxide → Porous graphene material
   (1) Graphite: purity 99.5%.
   (2) Preparation of graphene oxide: same as Example 1.
   (3) Graphene oxide and an ammonium carbonate solution are mixed, and the solvent is removed. The resulted material is solidified and pressed into a block material.
   (4) The material is then heated to 500 °C in vacuum to render ammonium carbonate to decompose. Part of the decomposed products is removed in vacuum. The resulted material is passivated, washed with a solvent, and dried to give the porous graphene material.

An automatic adsorption instrument (Belsorp type-II specific surface area tester from BEL Japan, Inc.) is used for determining the N₂ adsorption isotherm of the porous graphene material at 77K. The specific surface area, the pore volume and the pore size distribution of the porous graphene material are calculated with BET, t-Plot and BJH methods, respectively. Before measurement, the sample is subjected to a vacuum treatment at 150 °C for 10 h. N₂ adsorption amount at P/P0 = 0.99 is measured, and the total pore volume of the porous graphene material is calculated.

Measurement results: the porous graphene material prepared in Example 3 has a specific surface area aₛ of 424.41 m²/g, an average pore size dₚ of 9.2264 nm, and a pore specific surface area a_{P} of 655.9 m²/g.

### Example 4

In the present Example, the process for preparing a porous graphene material from graphene oxide is as follows:
Graphite → Graphene oxide → Graphene → Composite doped with graphene → Porous graphene material
   (1) Graphite: purity 99.5%.
   (2) Preparation of graphene oxide: same as Example 1.
   (3) Graphene: 100 mg of graphene oxide and 100 mL of deionized water are added into a 250 ml round-bottom flask, and the solution is a brownish-yellow suspension. The suspension is then dispersed with a 150 W ultrasonic wave. Finally, hydrazine hydrate (1 mL, 98%) is added and heated to 100 °C to react for 24 h. The resulted graphene is filtered, sequentially washed with 300 mL of water and 300 mL of methanol, and dried in a vacuum oven at 80 °C for 48 h.
   (4) Graphene and polystyrene beads are mixed, cooled down, solidified, and pressed into micro-scale particles.
   (5) The material is then heated to 2000 °C in vacuum to render polystyrene to decompose. Part of the decomposed products is removed in vacuum. The resulted material is passivated, washed with a solvent, and dried to give the porous graphene material.

Fig. 3 shows an SEM picture of the porous graphene material prepared in Example 4 from graphene and polystyrene beads. As seen from the figure, the porous graphene material has a porous structure.

An automatic adsorption instrument (Belsorp type-II specific surface area tester from BEL Japan, Inc.) is used for determining the N₂ adsorption isotherm of the porous graphene material at 77K. The specific surface area, the pore volume and the pore size distribution of the porous graphene material are calculated with BET, t-Plot and BJH methods, respectively. Before measurement, the sample is subjected to a vacuum treatment at 150 °C for 10 h. N₂ adsorption amount at P/P0 = 0.99 is measured, and the total pore volume of the porous graphene material is calculated.

Measurement results: the porous graphene material prepared in Example 4 has a specific surface area aₛ of 134.66 m²/g, an average pore size dₚ of 7.9471 nm, and a pore specific surface area a_{P} of 242.69 m²/g.

### Example 5

In the present Example, the process for preparing a porous graphene material from graphene oxide is as follows:
Graphite → Graphene oxide → Composite doped with graphene oxide → Porous graphene material
   (1) Graphite: purity 99.5%.
   (2) Preparation of graphene oxide: same as Example 1.
   (3) Graphene oxide and polypropylene nanoparticles are mixed, cooled down, solidified, and pressed into a block material.
   (4) The material is then heated to 1200 °C in vacuum to render polypropylene to decompose. Part of the decomposed products is removed in vacuum. The resulted material is passivated, washed with a solvent, and dried to give the porous graphene material.

An automatic adsorption instrument (Belsorp type-II specific surface area tester from BEL Japan, Inc.) is used for determining the N₂ adsorption isotherm of the porous graphene material at 77K. The specific surface area, the pore volume and the pore size distribution of the porous graphene material are calculated with BET, t-Plot and BJH methods, respectively. Before measurement, the sample is subjected to a vacuum treatment at 150 °C for 10 h. N₂ adsorption amount at P/P0 = 0.99 is measured, and the total pore volume of the porous graphene material is calculated.

Measurement results: the porous graphene material prepared in Example 5 has a specific surface area aₛ of 632.41 m²/g, an average pore size dₚ of 10.232 nm, and a pore specific surface area a_{P} of 712.52 m²/g.

### Example 6

In the present Example, the process for preparing a porous graphene material from graphene oxide is as follows:
Graphite → Graphene oxide → Graphene → Composite doped with graphene → Porous graphene material
   (1) Graphite: purity 99.5%.
   (2) Preparation of graphene oxide: same as Example 1.
   (3) Graphene: 100 mg of graphene oxide and 100 mL of deionized water are added into a 250 ml round-bottom flask, and the solution is a brownish-yellow suspension. The suspension is then dispersed with a 150 W ultrasonic wave. Finally, hydrazine hydrate (1 mL, 98%) is added and heated to 95 °C to react for 36 h. The resulted graphene is filtered, sequentially washed with 300 mL of water and 300 mL of methanol, and dried in a vacuum oven at 80 °C for 48 h.
   (4) Graphene and basic cupric carbonate powders are mixed, cooled down, solidified, and pressed into micro-scale particles.
   (5) The material is then heated to 1800 °C in vacuum to render basic cupric carbonate to decompose. Part of the decomposed products is removed in vacuum. The resulted material is passivated, washed with a solvent, and dried to give the porous graphene material.

An automatic adsorption instrument (Belsorp type-II specific surface area tester from BEL Japan, Inc.) is used for determining the N₂ adsorption isotherm of the porous graphene material at 77K. The specific surface area, the pore volume and the pore size distribution of the porous graphene material are calculated with BET, t-Plot and BJH methods, respectively. Before measurement, the sample is subjected to a vacuum treatment at 150 °C for 10 h. N₂ adsorption amount at P/P0 = 0.99 is measured, and the total pore volume of the porous graphene material is calculated.

Measurement results: the porous graphene material prepared in Example 6 has a specific surface area aₛ of 901.25 m²/g, an average pore size dₚ of 12.547 nm, and a pore specific surface area a_{P} of 845.12 m²/g.

### Example 7

In the present Example, the process for preparing a porous graphene material from graphene oxide is as follows:
Graphite → Graphene oxide → Composite doped with graphene oxide → Porous graphene material
   (1) Graphite: purity 99.5%.
   (2) Preparation of graphene oxide: same as Example 1.
   (3) Graphene oxide and sodium bicarbonate powders are mixed, cooled down, solidified, and pressed into a block material.
   (4) The material is then heated to 750 °C in vacuum to render sodium bicarbonate to decompose. Part of the decomposed products is removed in vacuum. The resulted material is passivated, washed with a solvent, and dried to give the porous graphene material.

### Example 8

In the present Example, the process for preparing a porous graphene material from graphene oxide is as follows:
Graphite → Graphene oxide → Graphene → Composite doped with graphene → Porous graphene material
   (1) Graphite: purity 99.5%.
   (2) Preparation of graphene oxide: same as Example 1.
   (3) Graphene: 100 mg of graphene oxide and 100 mL of deionized water are added into a 250 ml round-bottom flask, and the solution is a brownish-yellow suspension. The suspension is then dispersed with a 150 W ultrasonic wave. Finally, hydrazine hydrate (1 mL, 98%) is added and heated to 90 °C to react for 36 h. The resulted graphene is filtered, sequentially washed with 300 mL of water and 300 mL of methanol, and dried in a vacuum oven at 80 °C for 48 h.
   (4) Graphene and an ammonium carbonate solution are mixed, and the solvent is removed. The resulted material is solidified and pressed into a block material.
   (5) The material is then heated to 1750 °C in vacuum to render ammonium carbonate to decompose. Part of the decomposed products is removed in vacuum. The resulted material is passivated, washed with a solvent, and dried to give the porous graphene material.

### Example 9

In the present Example, the process for preparing a porous graphene material from graphene oxide is as follows:
Graphite → Graphene oxide → Composite doped with graphene oxide → Porous graphene material
   (1) Graphite: purity 99.5%.
   (2) Preparation of graphene oxide: same as Example 1.
   (3) Graphene oxide and polydimethylsiloxane bead powders are mixed, cooled down, solidified, and pressed into micro-scale particles.
   (4) The material is then heated to 1200 °C in vacuum to render polydimethylsiloxane to decompose. Part of the decomposed products is removed in vacuum. The resulted material is passivated, washed with a solvent, and dried to give the porous graphene material.

### Example 10

In the present Example, the process for preparing a porous graphene material from graphene oxide is as follows:
Graphite → Graphene oxide → Graphene → Composite doped with graphene → Porous graphene material
   (1) Graphite: purity 99.5%.
   (2) Preparation of graphene oxide: same as Example 1.
   (3) Graphene: 100 mg of graphene oxide and 100 mL of deionized water are added into a 250 ml round-bottom flask, and the solution is a brownish-yellow suspension. The suspension is then dispersed with a 150 W ultrasonic wave. Finally, hydrazine hydrate (1 mL, 98%) is added and heated to 100 °C to react for 36 h. The resulted graphene is filtered, sequentially washed with 300 mL of water and 300 mL of methanol, and dried in a vacuum oven at 80 °C for 48 h.
   (4) Graphene and polypropylene nanoparticle powders are mixed, cooled down, solidified, and pressed into a block material.
   (5) The material is then heated to 1600 °C in vacuum to render polypropylene to decompose. Part of the decomposed products is removed in vacuum. The resulted material is passivated, washed with a solvent, and dried to give the porous graphene material.

The above Examples illustrate several embodiments of the present invention, and the description thereof is specific and in details. However, these can not be consequently understood as a limitation to the scope of the present invention. It should be noted that a person skilled in the art may make various modifications and improvements without departing from the concept of the present invention, and those are all within the scope sought protection in the present invention. Accordingly, the scope sought protection in the present invention should subject to the appended claims.

## Claims

1. A porous graphene material, **characterized in that** the porous graphene material has a pore size of 1 nm to 10 µm and a specific surface area of 100 m²/g to 2000 m²/g.

2. The porous graphene material according to Claim 1, **characterized in that** the porous graphene material having a pore size of 50 nm to 10 µm represents 20% to 40% of the total volume; the porous graphene material having a pore size of 2 nm to 50 nm represents 35% to 55% of the total volume; and the porous graphene material having a pore size of 1 nm to 2 nm represents 20% to 25% of the total volume.

3. The porous graphene material according to Claim 1, **characterized in that** the porous graphene material has a pore size of 2 to 50 nm and a specific surface area of 150 m²/g to 1000 m²/g.

4. The porous graphene material according to Claim 1, **characterized in that** the porous graphene material has a pore specific surface area of 150 m²/g to 2500 m²/g.

5. A method for preparing a porous graphene material, comprising the steps of:
mixing graphene or graphene oxide with a pore-forming agent which is capable of releasing a gas, and pressing into a composite in a form of blocks or powdered particles; and
heating the composite to release a gas from the pore-forming agent to give the porous graphene material.

6. The method for preparing a porous graphene material according to Claim 5, **characterized in that** the pore-forming agent is dry ice, which is heated to a temperature under which dry ice gasifies.

7. The method for preparing a porous graphene material according to Claim 5, **characterized in that** the pore-forming agent is an organic polymeric material or an organic small-molecular material which has a decomposition temperature of below 2000 °C, and the procedure for releasing a gas from the pore-forming agent in the composite comprises: heating the composite to 500 to 2000 °C so that the organic polymeric material or the organic small-molecular material decomposes to release a gas.

8. The method for preparing a porous graphene material according to Claim 7, **characterized in that** the organic polymeric material is one or more of polycarbonate beads, polystyrene beads, polypropylene beads, polyacetylene beads, polyphenylene beads, polydimethylsiloxane beads, polycarbonate nanoparticles, polystyrene nanoparticles, polypropylene nanoparticles, polyacetylene nanoparticles, polyphenylene nanoparticles and polydimethylsiloxane nanoparticles; and
the organic small-molecular material is one or more of ammonium acetate, ammonium carbonate, tetramethyl ammonium acetate, ammonium nitrate, sodium bicarbonate, basic cupric carbonate and potassium permanganate.

9. The method for preparing a porous graphene material according to Claim 8, **characterized in that** the beads of the organic polymeric material have diameter of 10 nm to 1 µm.

10. The porous graphene material according to any one of Claims 1 to 4, for use as an electrode material in a supercapacitor or a lithium ion battery.
